# EUROPÄISCHE PATENTSCHRIFT

(11) **EP 2 041 698 B1**
(45) Veröffentlichungstag und Bekanntmachung des Hinweises auf die Patenterteilung: **19.10.2011**
(21) Anmeldenummer: 07786978.2
(22) Anmeldetag: 02.07.2007
(51) Int. Cl.: G06K 13/08, G07C 5/08, G07C 7/00

(54) **DATENKARTENEINFÜHREINRICHTUNG**
DATA CARD INSERTION DEVICE
DISPOSITIF D'INTRODUCTION DE CARTE DE DONNÉES

(30) Priorität: 03.07.2006 DE 102006030658
(43) Veröffentlichungstag der Anmeldung: 01.04.2009
(73) Patentinhaber: Continental Automotive GmbH, 30165 Hannover (DE)
(72) Erfinder: TRAMPERT, Harald, 78054 Villingen-Schwenningen (DE); WAHLER, Torsten, 78073 Bad Dürrheim (DE)
(86) Internationale Anmeldenummer: PCT/EP2007/056625
(87) Internationale Veröffentlichungsnummer: WO 2008/003668

(56) Entgegenhaltungen:
- EP-A- 0 281 728
- WO-A-2004/100047
- DE-U1- 20 021 266
- US-A- 5 265 951
- US-A- 5 300 763

## Beschreibung

Die Erfindung bezieht sich auf eine Datenkarteneinführeinrichtung, insbesondere für einen Fahrtenschreiber .eines Kraftfahrzeugs, mit einer eine schlitzartige Aufnahmeöffnung aufweisenden Frontblende, durch die eine Datenkarte einführbar ist, mit einer hinter der in Einführrichtung der Datenkarte angeordneten Dichteinrichtung, die einen in Einführrichtung hinter der Aufnahmeöffnung angeordneten Einführschlitz zum abgedichteten Einführen der Datenkarte aufweist, wobei die Dichteinrichtung ein einteiliges, plattenartiges Dichtelement aus einem elastischen Werkstoff aufweist, in dem der Einführschlitz schnittartig, durch die Elastizität des Werkstoffs des Dichtelements schließend ausgebildet ist, wobei an einem oder beiden zum Einführschlitz parallelen Endbereichen des Dichtelements und/oder an einem oder beiden Endbereichen des Einführschlitzes an dem Dichtelement ein oder zwei sich in Einführrichtung erstreckende Befestigungsarme angeordnet sind, die an einem oder mehreren Gehäuseteilen des Gehäuses der Datenkarteneinführeinrichtung befestigbar sind.

Bei einer derartigen Datenkarteneinführeinrichtung ist es bekannt, dass die Dichteinrichtung ein federnd gelagertes unteres elastisches Element aufweist, das mit Vorspannung an einem oberen Dichtelement in Anlage ist. Zwischen dem elastischen Element und dem Dichtelement ist unter Verdrängung des elastischen Elements und Bildung des Einführschlitzes die Datenkarte hindurchführbar.

Diese Datenkarteneinführeinrichtung weist eine Vielzahl von Bauteilen auf und erfordert einen großen Platzbedarf.

Aus der US 5,265,951 A ist eine Dateneinführeinrichtung der eingangs genannten Art bekannt.

Weiterhin ist aus der EP 0 281 728 A ist eine Datenkarteneinführeinrichtung bekannt, die eine zweiteilige Dichteinrichtung besitzt, zwischen dessen beiden Teilen ein Einführschlitz gebildet ist.

Aufgabe der Erfindung ist es daher eine Datenkarteneinführeinrichtung der eingangs beschriebenen Art zu schaffen, die aus wenigen Bauteilen besteht, nur einen geringen Platzbedarf erfordert und bei der in den Einführschlitz eindringende Restfeuchtigkeit abfließen kann.

Diese Aufgabe wird erfindungsgemäß durch eine Datenarteinführeinrichtung nach Anspruch 1 gelöst, wobei insbesondere die Befestigungsarme ein die Gehäuseteile umschließendes, radial umlaufend geschlossenes, an seinem dem plattenförmigen Dichtelement entgegengesetzten Ende offenes Schachtelement bildern, in dessen unterer Wand ein oder mehrere durchgehende Entwässerungsöffnungen ausgebildet sind.

Durch diese Ausbildung besteht die Dichteinrichtung aus einem einzigen Bauteil, so dass nur ein geringer Bauraum benötigt und eine einfache Montage ermöglicht wird.

Das plattenartige Dichtelement ist weiterhin auch einfach herstellbar.

Bei nicht im Einführschlitz befindlicher Datenkarte ist der Einführschlitz aufgrund der Elastizität des Werkstoffes des Dichtelements dicht verschlossen, ohne dass dazu zusätzliche Federelemente erforderlich sind.

Die beiden sich quer zum Einführschlitz erstreckenden Plattenflächen des plattenförmigen Dichtelements können parallel zueinander ausgebildet sein.

Es sind aber auch andere, von einer Ebene abweichende Ausgestaltungen einer oder beider Plattenflächen möglich. So können eine oder beide Plattenflächen konkav oder konvex oder auch dachförmig ausgebildet sein.

Der Übergang vom Einführschlitz des Dichtelements zum Einführschacht wird durch das Schachtelement dicht umschlossen, wobei durch die Entwässerungsöffnungen Reste von Feuchtigkeit, die mit der Datenkarte durch den Einführschlitz hindurchgetreten sind, nach.außen ablaufen können.

Vorzugsweise entspricht die Länge des Einführschlitzes der Breite der Datenkarte oder ist nur um ein geringes Maß größer, so dass die in den Einführschlitz eingeführte Datenkarte durch die Elastizität des Dichtelements dicht umschlossen ist.

Dabei kann der elastische Werkstoff des Dichtelements ein Kunststoff sein.

Das Dichtelement ist einfach herstellbar, wenn das Dichtelement ein Spritzgussteil ist.

Dazu kann der elastische Werkstoff des Dichtelements ein Elastomer, insbesondere ein thermoplastischer Elastomer sein.

Eine Erhöhung der Anschmiegbarkeit an die Datenkarte und damit eine Erhöhung der Dichtsicherheit wird dadurch erreicht, dass die einander gegenüberliegenden Längsseiten des Einführschlitzes als einander zugewandte Dichtlippen ausgebildet sind.

Eine Stabilität gegen Verformung beim Herausziehen der Datenkarte wird dadurch erreicht, dass das Dichtelement an einem den Einführschlitz ganz oder teilweise umschließenden Abstützrahmen entgegen der Einführrichtung abstützbar ist. Gleichzeitig ist auch der den Einführschlitz umgebende Bereich abgedichtet, so dass Schmutz und Feuchtigkeit nicht um das Äußere des Dichtelements herum in das Innere des Gehäuses der Datenkarteneinführeinrichtung gelangen kann.

Der oder die Befestigungsarme können sich über die Breite des plattenförmigen Dichtelements erstrecken.

Zur einfachen Herstellung und Verringerung des Montageaufwandes sind vorzugsweise das plattenförmige Dichtelement und die Befestigungsarme einteilig ausgebildet.

Das oder die Gehäuseteile können ganz oder teilweise einen Einführschacht zum Einführen der Datenkarte bilden.

Zur einfachen Montage und Befestigung des Schachtelements an den Gehäuseteilen kann das Schachtelement auf die entsprechend seiner Außenkontur ausgebildeten Gehäuseteile aufsteckbar sein.

Zur einfachen Sicherung des Schachtelements in seiner Einbaulage können die Gehäuseteile an ihrer Außenkontur ein oder mehrere hervorstehende Nocken besitzen, die in entsprechende Ausnehmungen der Befestigungsarme oder des Schachtelements eingreifen.

Eine weitgehende Formstabilität erhält das Schachtelement dadurch, dass die Wanddicke der Befestigungsarme oder des Schachtelements ein Mehrfaches der Wanddicke des plattenförmigen Dichtelements beträgt, wobei die Wanddicke der Befestigungsarme oder des Schachtelements vorzugsweise mindestens das Zweifache der Wanddicke des plattenförmigen Dichtelements beträgt.

Ein Ausführungsbeispiel der Erfindung ist in der Zeichnung dargestellt und wird im Folgenden näher beschrieben. Es zeigen:

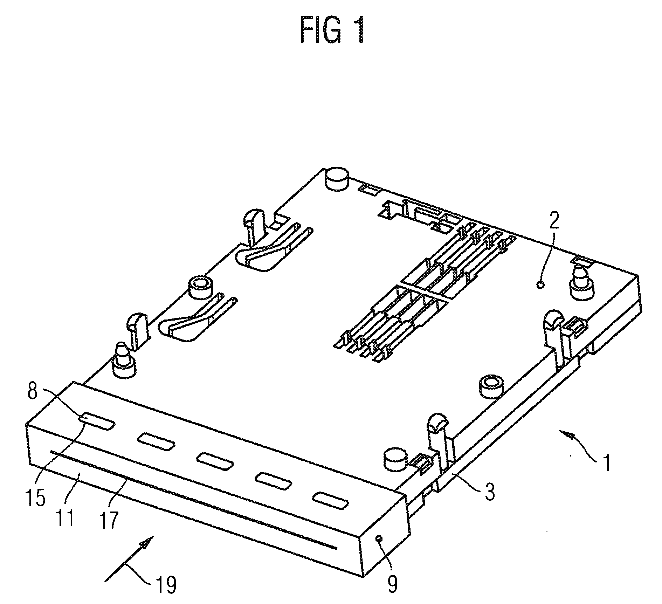

- Figur 1: eine perspektivische Ansicht einer Datenkarteneinführeinrichtung,
- Figur 2: einen Querschnitt eines Ausschnitts der Datenkarteneinführeinrichtung nach Figur 1 im Einführbereich mit eingeführter Datenkarte,

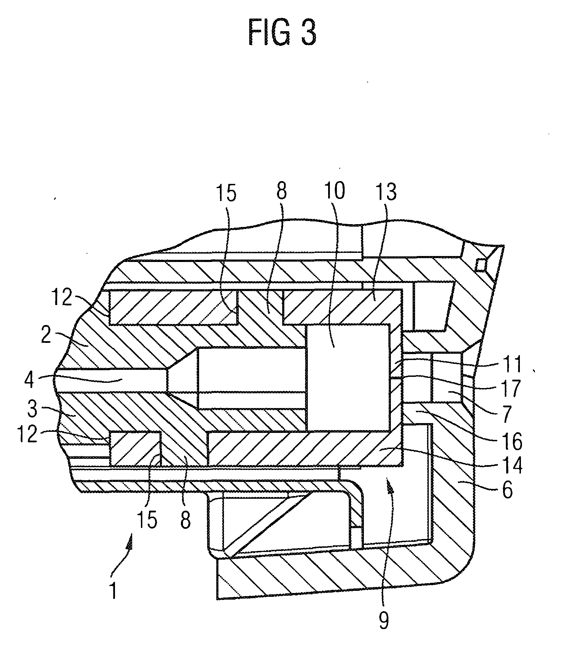

- Figur 3: den Ausschnitt nach Figur 2 ohne Datenkarte,

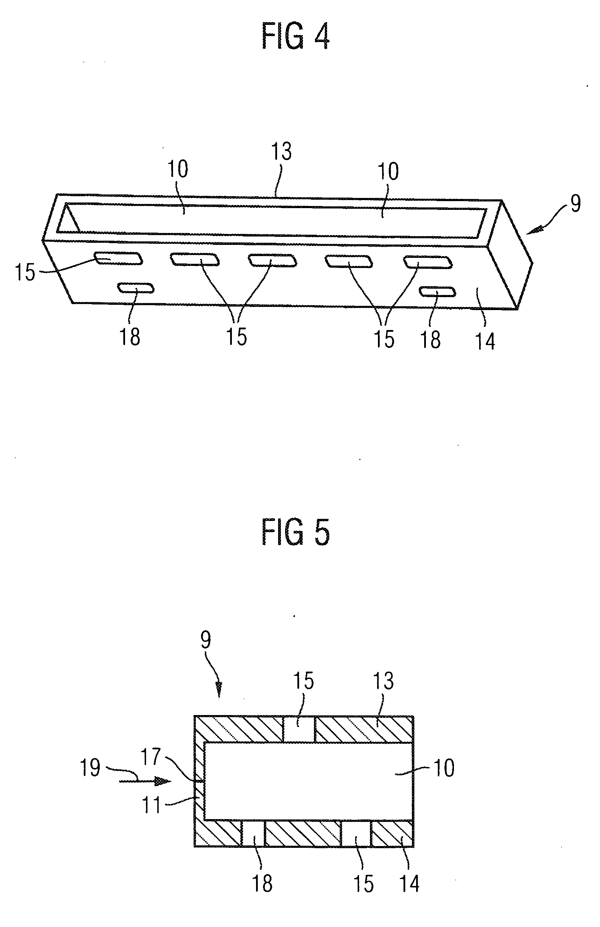

- Figur 4: eine perspektivische Rückansicht des Dichtelements mit einem Schachtelement der Datenkarteneinführeinrichtung nach Figur 1,
- Figur 5: einen Querschnitt von Dichtelement und Schachtelement nach Figur 4,

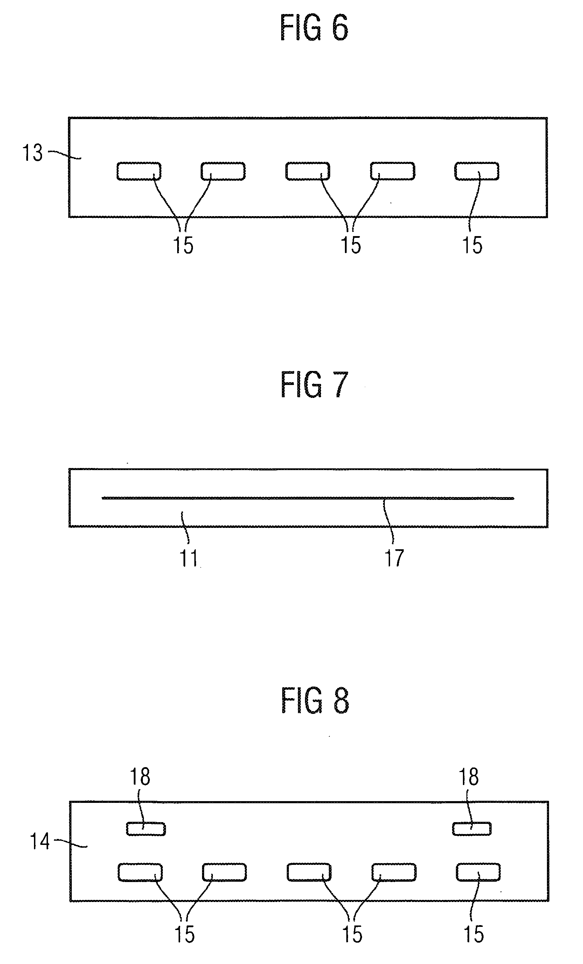

- Figur 6: eine Draufsicht von Dichtelement und Schachtelement nach Figur 4,
- Figur 7: eine Stirnansicht von Dichtelement und Schachtelement nach Figur 4 und
- Figur 8: eine Bodenansicht von Dichtelement und Schachtelement nach Figur 4.

Die dargestellte Datenkarteneinführeinrichtung für einen Fahrtschreiber eines Kraftfahrzeugs besitzt ein Gehäuse 1, das aus einem oberen Gehäuseteil 2 und einem unteren Gehäuseteil 3 besteht, die miteinander verbunden sind.

Zwischen den aneinander liegenden Flächen des ersten Gehäuseteils 2 und des zweiten Gehäuseteils 3 ist ein Einführschacht 4 zum Einführen einer Datenkarte 5 ausgebildet.

Frontseitig weist das Gehäuse 1 in einem Abstand zu oberem und unterem Gehäuseteil 2 und 3 eine Frontblende 6 auf, die dem Einführschacht 4 in einer Ebene gegenüberliegend eine schlitzartige Aufnahmeöffnung 7 besitzt.

Das der Frontblende 6 zugewandte Ende von oberem und unterem Gehäuseteil 2 und 3 besitzt eine Außenkontur mit einem quer liegendem rechteckigem Querschnitt.

Sowohl an der Oberseite des oberen Gehäuseteils 2 als auch an der Unterseite des unteren Gehäuseteils 3 ist jeweils eine Reihe von fünf hervorstehenden Nocken 8 rechteckigen Querschnitts angeordnet.

Auf die Außenkontur mit quer liegendem rechteckigem Querschnitt von oberem und unterem Gehäuseteil 2 und 3 ist ein vierkantrohrartiges Schachtelement 9 mit dem entsprechenden Innenquerschnitt seines inneren Schachts 10 aufgesteckt, wobei frontblendenseitig der Schacht 10 durch ein plattenartiges Dichtelement 11 verschlossen ist.

Das Schachtelement 9 ist bis zur Anlage seines dem Dichtelement 11 entgegengesetzten Ende an einer einen Anschlag 12 bildenden Stufe an oberem und unterem Gehäuseteil 2 und 3 aufgeschoben.

Die obere wand 13 und die untere Wand 14 des Schachtelements 9 weist entsprechend den Nocken 8 ausgebildete durchgehende Ausnehmungen 15 auf, in die die Nocken 8 bei aufgeschobenem Schachtelement 9 eingreifen.

Schachtelement 9 und Dichtelement 11 sind einteilig als Spritzgussteil ausgebildet und bestehen aus einem thermoplastischen Elastomer.

Die Wanddicke der oberen und unteren Wand 13 und 14 des Schachtelements 9 beträgt etwa das Dreifache der wanddicke des Dichtelements 11, so dass die Flexibilität des Dichtelements 11 größer ist als die Flexibilität des Schachtelements 9.

Damit kann das Schachtelement 9 zwar unter elastischer Verformung über die Nocken 8 hinweg auf die Außenkontur von oberen und unterem Gehäuseteil 2 und 3 bis zur Anlage am Anschlag 12 aufgeschoben werden, behält nach dem Einrasten der Nocken 8 in die Ausnehmungen 15 aber weitgehend seine spritzgegossene Form bei.

Nach der Montage von Schachtelement 9 und Dichtelement 11 erfolgt die Montage der Frontblende 6.

Diese weist einen zum Dichtelement 11 gerichteten Abstützrahmen 16 auf, der mit seiner freien Stirnseite an dem Dichtelement 11 zur Anlage kommt.

Herstellungstoleranzen von oberem und unterem Gehäuseteil 2 und 3, von Schachtelement 9 und Dichtelement 11 sowie von Frontblende 6 und Abstützrahmen 16 werden dadurch kompensiert, dass der Frontrahmen 16 mit leichter Vorspannung an dem Dichtelement 11 in Anlage ist.

Das Dichtelement 11 besitzt einen schnittartigen durchgehenden Einführschlitz 17, der sich in der Ebene des Einführschachtes 4 erstreckt und der durch die Elastizität des Werkstoffes des Dichtelements 11 bei nicht eingeführter Datenkarte 5 geschlossen ist.

Die Breite des Einführschlitzes 17 entspricht etwa der Breite der Datenkarte 5.

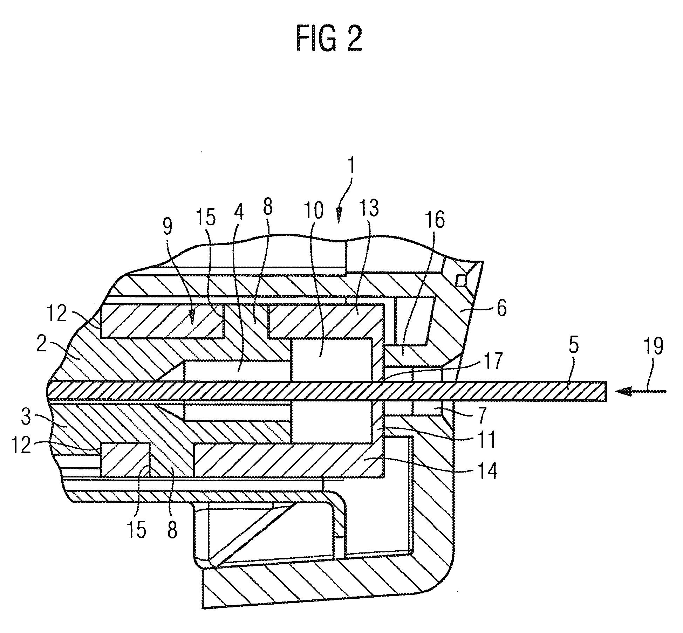

Die Datenkarte 5 wird, wie in Figur 2 zu sehen ist, durch die Aufnahmeöffnung 7 der Frontblende 6 und den Abstützrahmen 16 in den Einführschlitz 17 und durch diesen in den Einführschacht 4 eingeführt.

Dabei weitet sich der Einführschlitz 17 entsprechend der Datenkarte 5 elastisch auf, bleibt aber mit elastischer Vorspannung die Datenkarte 5 umschließend dicht an dieser in Anlage.

Dies ermöglicht es die Datenkarteneinführeinrichtung auch bei Geräten wie einem Fahrtenschreiber zu verwenden, bei denen die Datenkarte 5 nicht vollständig in das Gerät eingezogen wird sondern wie in Figur 2 zu sehen, in eingeführtem Zustand teilweise aus der Datenkarteneinführeinrichtung noch herausragt.

Bei einem Einführen der Datenkarte 5 in Einführrichtung 19 wird durch das mit elastischer Vorspannung an der Datenkarte 5 Anliegen des Dichtelements 11, Schmutz und Feuchtigkeit dichtlippenartig von der Datenkarte 5 abgestreift.

Restfeuchtigkeit, die dennoch durch den Einführschlitz 17 eindringt, kann sich hinter dem Einführschlitz 17 sammeln und über zwei Entwässerungsöffnungen 18 in der unteren Wand 14 des Schachtelements 9 abfließen.

## Patentansprüche

1. Datenkarteneinführeinrichtung, insbesondere für einen Fahrtenschreiber eines Kraftfahrzeugs, mit einer eine schlitzartige Aufnahmeöffnung aufweisenden Frontblende, durch die eine Datenkarte (5) einführbar ist, mit einer , in Einführrichtung der Datenkarte (5) dahinter angeordneten Dichteinrichtung, die einen in Einführrichtung hinter der Aufnahmeöffnung angeordneten Einführschlitz zum abgedichteten Einführen der Datenkarte (5) aufweist, wobei die Dichteinrichtung ein einteiliges, plattenförmiges Dichtelement (11) aus einem elastischen Werkstoff aufweist, in dem der Einführschlitz (17) schnittartig, durch die Elastizität des Werkstoffs des Dichtelements (11) schließend ausgebildet ist,
wobei an einem oder beiden zum Einführschlitz (17) parallelen Endbereichen des Dichtelements (11) und/oder an einem oder beiden Endbereichen des Einführschlitzes (17) an dem Dichtelement (11) ein oder zwei sich in Einführrichtung (19) erstreckende Befestigungsarme angeordnet sind, die an einem oder mehreren Gehäuseteilen (2, 3) des Gehäuses (1) der Datenkarteneinführeinrichtung befestigbar sind,
**dadurch gekennzeichnet,**
**dass** die Befestigungsarme ein die Gehäuseteile (2, 3) umschließendes, radial umlaufend geschlossenes, an seinem dem plattenförmigen Dichtelement (11) entgegengesetzten Ende offenes Schachtelement (9) bilden, in dessen unterer Wand (14) ein oder mehrere durchgehende Entwässerungsöffnungen (18) ausgebildet sind.

2. Datenkarteneinführeinrichtung nach Anspruch 1, **dadurch gekennzeichnet, dass** die Länge des Einführschlitzes (17) der Breite der Datenkarte (5) entspricht.

3. Datenkarteneinführeinrichtung nach einem der vorhergehenden Ansprüche, **dadurch gekennzeichnet, dass** der elastische Werkstoff des Dichtelements (11) ein Kunststoff ist.

4. Datenkarteneinführeinrichtung nach Anspruch 3, **dadurch gekennzeichnet, dass** das Dichtelement (11) ein Spritzgussteil ist.

5. Datenkarteneinführeinrichtung nach einem der Ansprüche 3 und 4, **dadurch gekennzeichnet, dass** der elastische Werkstoff des Dichtelements (11) ein Elastomer, insbesondere ein thermoplastischer Elastomer ist.

6. Datenkarteneinführeinrichtung nach einem der vorhergehenden Ansprüche, **dadurch gekennzeichnet, dass** die einander gegenüberliegenden Längsseiten des Einführschlitzes als einander zugewandte Dichtlippen ausgebildet sind.

7. Datenkarteneinführeinrichtung nach einem der vorhergehenden Ansprüche, **dadurch gekennzeichnet, dass** das Dichtelement (11) an einem den Einführschlitz (17) ganz oder teilweise umschließenden Abstützrahmen (16) entgegen der Einführrichtung (19) abstützbar ist.

8. Datenkarteneinführeinrichtung nach einem der vorhergehenden Ansprüche, **dadurch gekennzeichnet, dass** der oder die Befestigungsarme sich über die Breite des plattenförmigen Dichtelements (11) erstrecken.

9. Datenkarteneinführeinrichtung nach einem der vorhergehenden Ansprüche, **dadurch gekennzeichnet, dass** das plattenförmige Dichtelement (11) und die Befestigungsarme einteilig ausgebildet sind.

10. Datenkarteneinführeinrichtung nach einem der vorhergehenden Ansprüche, **dadurch gekennzeichnet, dass** das oder die Gehäuseteile (2, 3) ganz oder teilweise einen Einführschacht (4) zum Einführen der Datenkarte (5) bilden.

11. Datenkarteneinführeinrichtung nach einem der vorhergehenden Ansprüche, **dadurch gekennzeichnet, dass** das Schachtelement (9) auf die entsprechend seiner Außenkontur ausgebildeten Gehäuseteile (2, 3) aufsteckbar ist.

12. Datenkarteneinführeinrichtung nach einem der vorhergehenden Ansprüche, **dadurch gekennzeichnet, dass** die Gehäuseteile (2, 3) an ihrer Außenkontur ein oder mehrere hervorstehende Nocken (8) besitzen, die in entsprechende Ausnehmungen (15) der Befestigungsarme oder des Schachtelements (9) eingreifen.

13. Datenkarteneinführeinrichtung nach einem der vorhergehenden Ansprüche, **dadurch gekennzeichnet, dass** die Wanddicke der Befestigungsarme oder des Schachtelements (9) ein Mehrfaches der Wanddicke des plattenförmigen Dichtelements (11) beträgt.

14. Datenkarteneinführeinrichtung nach Anspruch 13, **dadurch gekennzeichnet, dass** die Wanddicke der Befestigungsarme oder des Schachtelements (9) mindestens das Zweifache der Wanddicke des plattenförmigen Dichtelements (11) beträgt.

## Claims

1. Data card insertion device, in particular for a tachograph of a motor vehicle, with a front panel having a slot-like receiving opening, through which a data card (5) can be inserted, with a sealing device arranged behind it in the direction of insertion of the data card (5), which sealing device has an insertion slot arranged behind the receiving opening in the direction of insertion for sealed insertion of the data card (5), the sealing device comprising a one-piece, sheet-shaped sealing element (11) of an elastic material, in which the insertion slot (17) is constructed as an incision which is closed by the elasticity of the material of the sealing element (11),
one or two fastening arms which extend in the direction of insertion (19) being arranged at one or both end regions of the sealing element (11) parallel to the insertion slot (17) and/or on the sealing element (11) at one or both end regions of the insertion slot (17), which fastening arms are fastenable to one or more housing parts (2, 3) of the housing (1) of the data card insertion device,
**characterized**
**in that** the fastening arms form a passage element (9) which encloses the housing parts (2, 3), is radially circumferentially closed, is open at the opposite end thereof to the sheet-shaped sealing element (11) and in the lower wall (14) of which are constructed one or more drainage through-openings (18).

2. Data card insertion device according to Claim 1, **characterized in that** the length of the insertion slot (17) corresponds to the width of the data card (5).

3. Data card insertion device according to one of the preceding claims, **characterized in that** the elastic material of the sealing element (11) is a plastics material.

4. Data card insertion device according to Claim 3, **characterized in that** the sealing element (11) is an injection molding.

5. Data card insertion device according to one of Claims 3 and 4, **characterized in that** the elastic material of the sealing element (11) is an elastomer, in particular a thermoplastic elastomer.

6. Data card insertion device according to one of the preceding claims, **characterized in that** the mutually opposing longitudinal sides of the insertion slot are constructed as facing sealing lips.

7. Data card insertion device according to one of the preceding claims, **characterized in that** the sealing element (11) may be supported in the direction opposite to the direction of insertion (19) against a supporting frame (16) entirely or partially surrounding the insertion slot (11).

8. Data card insertion device according to one of the preceding claims, **characterized in that** the fastening arm(s) extend(s) over the width of the sheet-shaped sealing element (11).

9. Data card insertion device according to one of the preceding claims, **characterized in that** the sheet-shaped sealing element (11) and the fastening arms are of one-piece construction.

10. Data card insertion device according to one of the preceding claims, **characterized in that** the housing part(s) (2, 3) entirely or partially form(s) an insertion passage (4) for insertion of the data card (5).

11. Data card insertion device according to one of the preceding claims, **characterized in that** the passage element (9) can be fitted onto the housing parts (2, 3) which are constructed in accordance with its outer contour.

12. Data card insertion device according to one of the preceding claims, **characterized in that** the housing parts (2, 3) have on their outer contour one or more projecting lugs (8) which engage in corresponding recesses (15) of the fastening arms or of the passage element (9).

13. Data card insertion device according to one of the preceding claims, **characterized in that** the wall thickness of the fastening arms or of the passage element (9) amounts to a multiple of the wall thickness of the sheet-shaped sealing element (11).

14. Data card insertion device according to Claim 13, **characterized in that** the wall thickness of the fastening arms or of the passage element (9) amounts to at least twice the wall thickness of the sheet-shaped sealing element (11).

## Revendications

1. Dispositif d'introduction de carte de données, notamment pour un contrôlographe d'un véhicule automobile, comprenant un panneau avant ayant une ouverture de réception de type en fente, dans laquelle une carte (5) de données peut être introduite, comprenant un dispositif d'étanchéité disposé derrière dans le sens d'introduction de la carte (5) de données et ayant, pour l'introduction d'une manière étanche de la carte (5) de données, une fente d'introduction disposée derrière l'ouverture de réception dans le sens d'introduction, dans lequel le dispositif d'étanchéité comporte un élément (11) d'étanchéité d'une seule pièce, en forme de plateau et en un matériau élastique, dans lequel la fente (17) d'introduction est constituée sous la forme d'une entaille, en se fermant par l'élasticité du matériau de l'élément (11) d'étanchéité,
dans lequel sur l'une ou sur les deux zones d'extrémité de l'élément (11) d'étanchéité parallèles à la fente (17) d'introduction et/ou sur l'une ou sur les deux zones de la fente (17) d'introduction, il est disposé sur l'élément (11) d'étanchéité un ou deux bras de fixation, s'étendant dans le sens (19) d'introduction et pouvant être fixés à une ou à plusieurs parties (2, 3) du boîtier (1) du dispositif d'introduction de carte de données,
**caractérisé**
**en ce que** les bras de fixation forment un élément (9) de puits, qui entoure les parties (2, 3) de boîtier, qui est fermé autour radialement, qui est ouvert à son extrémité opposée à l'élément (11) d'étanchéité en forme de plateau et dans la paroi (14) inférieure duquel sont formées une ou plusieurs ouvertures (18) traversantes d'égouttage.

2. Dispositif d'introduction de carte de données suivant la revendication 1, **caractérisé en ce que** la longueur de la forme (17) d'introduction correspond à la largeur de la carte (5) de données.

3. Dispositif d'introduction de carte de données suivant l'une des revendications précédentes, **caractérisé en ce que** le matériau élastique de l'élément d'étanchéité est une matière plastique.

4. Dispositif d'introduction de carte de données suivant la revendication 3, **caractérisé en ce que** l'élément (11) d'étanchéité est une pièce moulée par injection.

5. Dispositif d'introduction de carte de données suivant l'une des revendications 3 et 4, **caractérisé en ce que** le matériau élastique de l'élément (11) d'étanchéité est un élastomère, en étant notamment un élastomère thermoplastique.

6. Dispositif d'introduction de carte de données suivant l'une des revendications précédentes, **caractérisé en ce que** les côtés longitudinaux opposés l'un à l'autre de la fente d'introduction sont constituées sous la forme de lèvres d'étanchéité tournées l'une vers l'autre.

7. Dispositif d'introduction de carte de données suivant l'une des revendications précédentes, **caractérisé en ce que** l'élément (11) d'étanchéité peut s'appuyer, dans le sens contraire au sens (19) d'introduction, sur un cadre (16) d'appui entourant en tout ou partie la fente (17) d'introduction.

8. Dispositif d'introduction de carte de données suivant l'une des revendications précédentes, **caractérisé en ce que** le ou les bras de fixation s'étendent sur la largeur de l'élément (11) d'étanchéité en forme de plateau.

9. Dispositif d'introduction de carte de données suivant l'une des revendications précédentes, **caractérisé en ce que** l'élément (11) d'étanchéité en forme de plateau et les bras de fixation sont constitués d'une seule pièce.

10. Dispositif d'introduction de carte de données suivant l'une des revendications précédentes, **caractérisé en ce que** la ou les parties (2, 3) du boîtier forment en tout ou partie un puits (4) d'introduction pour l'introduction de la carte (5) de données.

11. Dispositif d'introduction de carte de données suivant l'une des revendications précédentes, **caractérisé en ce que** l'élément (9) formant puits peut être enfilé sur les parties (2, 3) de boîtier constitué conformément à son contour extérieur.

12. Dispositif d'introduction de carte de données suivant l'une des revendications précédentes, **caractérisé en ce que** les parties (2, 3) du boîtier ont sur leur contour extérieur un ou plusieurs bossages (8) en saillie, qui pénètrent dans des évidements (15) correspondants des bras de fixation ou de l'élément (9) formant puits.

13. Dispositif d'introduction de carte de données suivant l'une des revendications précédentes, **caractérisé en ce que** l'épaisseur de paroi des bras de fixation ou de l'élément (9) formant puits représente un multiple de l'épaisseur de paroi de l'élément (11) d'étanchéité en forme de plateau.

14. Dispositif d'introduction de carte de données suivant la revendication 13, **caractérisé en ce que** l'épaisseur de paroi des bras de fixation de l'élément (9) formant puits représente au moins deux fois l'épaisseur de paroi de l'élément (11) d'étanchéité en forme de plateau.
